(19) Europäisches Patentamt
European Patent Office
Office européen des brevets

(11) Veröffentlichungsnummer: **0 292 772 B1**

(12) **EUROPÄISCHE PATENTSCHRIFT**

(45) Veröffentlichungstag der Patentschrift: **08.12.93**

(51) Int. Cl.5: **C08G 63/66**, C08G 18/44, C08G 18/10

(21) Anmeldenummer: **88107467.8**

(22) Anmeldetag: **10.05.88**

Die Akte enthält technische Angaben, die nach dem Eingang der Anmeldung eingereicht wurden und die nicht in dieser Patentschrift enthalten sind.

(54) **Polyether-Polycarbonat-Diole, ihre Herstellung und Verwendung als Ausgangsprodukte für Polyurethankunststoffe.**

(30) Priorität: **21.05.87 DE 3717060**

(43) Veröffentlichungstag der Anmeldung:
**30.11.88 Patentblatt 88/48**

(45) Bekanntmachung des Hinweises auf die Patenterteilung:
**08.12.93 Patentblatt 93/49**

(84) Benannte Vertragsstaaten:
**AT BE CH DE ES FR GB IT LI NL SE**

(56) Entgegenhaltungen:
**DE-A- 1 915 908**
**DE-A- 2 555 805**
**US-A- 4 463 141**
**US-A- 4 634 743**

(73) Patentinhaber: **BAYER AG**

**D-51368 Leverkusen(DE)**

(72) Erfinder: **König, Klaus, Dr.**
**Zum Hahnenberg 40**
**D-5068 Odenthal(DE)**
Erfinder: **Barnes, James Michael**
**Bechhausen 60**
**D-5632 Wermelskirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die vorliegende Erfindung betrifft neue Polyether-Polycarbonat-Diole auf Basis des 1,6-Hexandiols, die Herstellung dieser Produkte sowie ihre Verwendung als Ausgangsstoffe für hochwertige Polyurethan-Kunststoffe.

Aliphatische Polycarbonat-Diole sind seit langem bekannt. Sie werden aus nicht vicinalen Diolen durch Umsetzung mit Diarylcarbonat (DOS 1915 908), Dialkylcarbonat (DOS 2555 805), Dioxolanonen (DOS 2523 352), Phosgen (DOS 1595 446), Bis-chlorkohlensäureestern (DP 857 948) oder Harnstoff (P. Ball, H. Fuillmann und W. Heitz, Angew. Chem. 92 1980 Nr. 9, S. 742, 743) hergestellt. Von den in der Literatur beschriebenen Diolen haben bislang nur solche auf ausschließlicher oder vorwiegender Basis des 1,6-Hexandiols größere technische Bedeutung erlangt. So werden aus Hexandiolpolycarbonat nach bekannten Verfahren hochwertige Polyurethan-Elastomere und -Beschichtungsmittel hergestellt, die insbesondere wegen der hervorragenden Resistenz gegen hydrolytische Einflüsse für die Herstellung von Artikeln mit langer Lebensdauer eingesetzt werden. Die Hydrolysefestigkeit solcher Polyurethane ist bekanntlich um Größenordnungen besser als die von Polyurethanen auf Basis von Adipinsäure-Polyester als Diolkomponente. Reine Hexandiolpolycarbonate (Mol.-Gew. 500-4.000) sind Wachse mit einem Erweichungspunkt von 45-55 °C (je nach MG). Die Kristallisationsneigung des Weichsegments führt dazu, daß die entsprechenden Polyurethane bei tiefen Temperaturen zum Verhärten neigen und ihre Flexibilität verlieren. Um diesen gravierenden Nachteil zu beheben, wurden Hexandiolpolycarbonate hergestellt, bei denen der Erweichungspunkt durch Einbau von Störkomponenten je nach deren Anteil mehr oder weniger stark erniedrigt war. Da die hierfür geeigneten längerkettigen Diole technische nicht verfügbar waren, wurde hierfür Adipinsäure (DAS 1964 998), Caprolacton (DAS 1770 245) oder Di-, Tri-und Tetraethylenglykol (DAS 2221 751) verwendet. Die Folge war eine Verminderung der Hydrolysefestigkeit der Polyurethane durch die leichter hydrolysierenden Estergruppen bzw. die hydrophilen Ethersegmente.

Ein weiterer Nachteil der Hexandiolpolycarbonate ist deren relativ hohe Eigenviskosität (z. B. ca. 5.000 mPa.s bei 60 °C, MG 2.000), die insbesondere dann zu gewissen Verarbeitungsschwierigkeiten führt, wenn die Polyurethan-Herstellung nach dem Zweistufenverfahren über ein Isocyanat-Präpolymer erfolgen soll.

Hochwertige Polyurethane (PU) werden zunehmend in Gebieten eingesetzt, bei denen die entsprechenden Artikel außer hydrolytischen Einflüssen auch dem Angriff durch Mikroorganismen ausgesetzt sind. Dies gilt z. B. für Walzen in Druckerei- oder Textilbetrieben, für Kabelummantelungen, für Federelemente und Schwingungsdämpfer im Maschinenbau, für Beschichtungen von Markisen, Flachdächern und Gartenmöbeln sowie für Elastomerfasern in Freizeittextilien. Hier zeigen PU auf Basis von aliphatischen Polycarbonaten eine ähnliche Anfälligkeit wie solche auf Basis aliphatischer Polyester.

Bekannterweise sind Polyurethane auf Basis von Polyethern bedeutend resistenter gegen den Abbau durch Mikroorganismen. Die für die genannten Einsatzgebiete mit hohen Oualitätsanforderungen ausschließlich in Frage kommenden und auch verwendeten Polymerisate des Tetrahydrofurans weisen hier wiederum einige andere Nachteile auf. So führt auch hier die Kristallintät zu einer Verhärtungstendenz des PU bei tiefen Temperaturen; insbesondare dann, wenn das angestrebte Eigenschaftsprofil der PU den Einsatz von Weichsegmenten mit mittleren MG von 2.000 und höher erfordert. Die Quellbeständigkeit der PU sowohl in Wasser als auch in organischen Lösungsmitteln ist nur mäßig; das gleiche gilt für die Weiterreißfestigkeit.

In dem US-Patent Nr. 4463141 werden Polyetherpolycarbonate der allgemeinen Formel

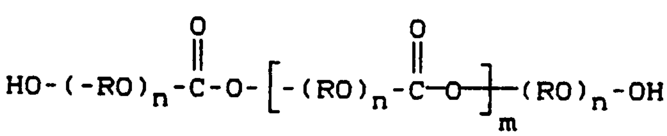

mit

R = $-CH_2-CH_2-CH_2-CH_2-$

n = 7 - 45 und

m = 0 - 18,

ihre Herstellung und Verwendung beschrieben.

Sie werden durch Kondensation von Polytetramethylenetherglykolen vom mittleren Molekulargewicht 500-3.000, vorzugsweise 650-2.900, mit Dialkylcarbonaten, cyclischen Carbonaten oder Phosgen hergestellt.

für die mittleren Molekulargewichte der Polyethercarbonate ergibt sich aus der allgemeinen Formel in Bereich von 828 bis 51.192. Für das Verhältnis von Ethergruppen zu Carbonatgruppen resultiert als niedrigster Wert 12:1, als höchster Wert 46,3:1.

Der nur geringfügige Austausch von Ethergruppen durch Carbonatgruppen in den beschriebenen Produkten bewirkt naturgemäß auch nur eine geringfügige Änderung im Eigenschaftsbild der Polyethercarbonate gegenüber den reinen Polytetramethylenetherglykolen.

Dies gilt auch für die aus dem US-Patent Nr. 4476 293 bekannten Produkte, wo zur Herstellung von Polyethercarbonat-Diolen als Ausgangsprodukte Copolyether-Diole aus Tetrahydrofuran und 10-80 Gew.-% eines anderen cyclischen Alkylenoxids mit zwei oder drei Kohlenstoffatomen im Ring (Epoxide und Oxetane, MG 600-3.000) zu Polycarbonaten kondensiert werden.

Zur Herstellung hochwertiger Polyurethane sind derartige Produkte nur schlecht geeignet, da der Anteil an hydrophilen Ethersegmenten und/oder seitenständigen Substituenten die Gebrauchseigenschaften der Polyurethanerzeugnisse erfahrungsgemäß stark negativ beeinflussen.

Es sind auch Hydroxyl-Endgruppen aufweisende Polyether auf Basis des 1,6-Hexandiols längst bekannt. Sie können durch Direktveretherung von Hexandiol mit sauren Katalysatoren wie z. B. p-Toluolsulfonsäure (USP 2492 955) oder Benzol- bzw. Naphthalindisulfonsäure (DAS 1570 540) hergestellt werden.

Die bei Temperaturen von 150-200 °C verlaufende Kondensation ist um so mehr von Nebenreaktionen und Verfärbungen begleitet, je höher die angestrebten mittleren Molekulargewichte sind. Zum Erreichen von Molekulargewichten von 1.000-2.000, wie sie in der Polyurethan-Chemie üblich und erforderlich sind, sind lange Reaktionszeiten bei relativ hoher Temperatur erforderlich. mit dem Kondensationswasser destillieren die Nebenprodukte Oxepan, Hexadien und Hexenol ab, wodurch die Ausbeute stark vermindert wird (USP 2492 955).

Außerdem besteht die Gefahr, daß die Produkte anstelle von OH-Gruppen endständige Doppelbindungen enthalten, die sich bei der Polyurethansynthese als Kettenabbrecher störend bemerkbar machen (USP 2492 955).

Die Hexandiolpolyether sind kristallin mit Erweichungspunkten über 60 °C; die daraus hergestellten PU zeigen ein schlechtes Tieftemperaturverhalten (schlechte Flexibilität in der Kälte, Dehnungskristallisation). Aus den genannten Gründen haben sie bislang auch noch keinerleitechnische Bedeutung erlangt.

Es wurde nun überraschend gefunden, daß man zu einer sehr brauchbaren Polyolkomponente zur Herstellung hochwertiger PU-Kunststoffe gelangt, die alle Nachteile der genannten Ausgangsprodukte nicht aufweisen, wenn man kurzkettige Veretherungsprodukte des Hexandiols mit geeigneten Derivaten der Kohlensäure zu längerkettigen Polyether-Polycarbonat-Diolen umsetzt.

Ein Gegenstand der vorliegenden Erfindung sind somit Hydroxyl-Endgruppen aufweisende Polyether-Polycarbonate mit MG von 500-12.000, vorzugsweise 700-6.000, bestimmt durch Messung der OH-Zahl, bei denen Hexamethylengruppen die bis zu 50 Mol-% durch Penta-, Hepta-, Octa-, Nona- oder Decamethylengruppen, ersetzt sein können, vorzugsweise aber ausschließlich Hexamethylengruppen statistisch, alternierend oder blockweise durch Ether- und Carbonatgruppen verknüpft sind, wobei das Verhältnis von Ethergruppen zu Carbonatgruppen von 5:1 bis 1:5, vorzugsweise von 3:1 bis 1:3 beträgt.

Ein weiterer Gegenstand der Erfindung sind Verfahren zur Herstellung der neuen Polyether-Polycarbonate, die dadurch gekennzeichnet sind, daß man in der ersten Reaktionsstufe Polyetherdiole mit MG von 150-500, vorzugsweise 180-400, durch an sich bekannte Veretherung von Hexandiol-1,6 und gegebenenfalls Heptandiol-1,7, Octandiol-1,8, Nonandiol-1,9, vorzugsweise ausschließlich Hexandiol-1,6, oder durch Einwirkung von Basen auf entsprechende Gemische von $\alpha,\Omega$-Diolen, $\alpha,\Omega$-Halogenalkoholen und $\alpha,\Omega$-Dihalogenalkanen herstellt und in der 2. Reaktionsstufe die Polyetherdiole in an sich bekannten Weise, gegebenenfalls zusammen mit Pentandiol-1,5, Hexandiol-1,6, Heptandiol-1,7, Octandiol-1,8, Nonandiol-1,9 oder Decandiol-1,10, vorzugsweise ausschließlich die Polyetherdiole, gegebenenfalls im Gemisch mit Hexandiol-1,6, mit Diarylcarbonaten, Dialkylcarbonaten, Dioxolanonen, Hexandiol-bischlorkohlensäureesten, Phosgen oder Harnstoff, vorzugsweise mit Diphenylcarbonat, zu Polyether-Polycarbonaten mit MG von 500-12.000, vorzugsweise 700-6.000 umsetzt, wobei der Gesamtanteil der aliphatischen Reste außer Hexamethylenresten in den beiden Reaktionsstufen höchstens 50 Mol-% ausmachen darf.

Ein weiterer Gegenstand der vorliegenden Erfindung ist die Herstellung von gegebenenfalls geschäumten Polyurethan-Kunststoffen durch Umsetzung von höhermolekularen, mindestens zwei Hydroxylgruppen enthaltenden Verbindungen gegebenenfalls weiteren niedermolekularen Di- und Polyolen, niedermolekularen Kettenverlängeren und gegebenenfalls Treibmitteln mit Di- und/oder Polyisocyanaten nach dem Ein-oder Zweitstufenverfahren, gegebenenfalls in inerten Lösungsmitteln oder in wäßriger Emulsion und übliche Hilfs- und Zusatzstoffen, dadurch gekennzeichnet, daß die höhermolekularen Hydroxyverbindungen, zumindest zu 50 Gew.-% aus den erfindungsgemäßen Polyether-Polycarbonaten bestehen.

Ausgangsprodukte für die Herstellung der erfindungsgemäßen Polyether-Polycarbonat-Diole sind:

1. Für die Polyetherdiole:

Hexandiol-1,6, Heptandiol-1,7, Octandiol-1,8, Nonandiol-1,9, Decandiol-1,10, 6-Chlorhexanol, 6-Bromhexanol, 1,6-Dichlorhexan, 1,6-Dibromhexan, vorzugsweise ausschließlich Hexandiol-1,6.

2. Als Katalysatoren für die Veretherung der Diole können Schwefelsäure, Butansulfonsäure, Perfluorbutansulfonsäure, Benzol- und Toluolsulfonsäure, Benzol-und Naphthalindisulfonsäuren, saure Ionenaustauscher mit Sulfonsäuregruppen, saure Tonerden eingesetzt werden. Vorzugsweise wird Naphthalin-1,5-disulfonsäure in Anteilen von 0,1 bis 2, vorzugsweise 0,2 bis 1 Gew.-% eingesetzt.

3. Als gegebenenfalls zusammen mit den Polyethern der ersten Reaktionsstufe in der zweiten Reaktionsstufe weitere einsetzbare Polyole:

Pentandiol-1,5, Hexandiol-1,6, Heptandiol-1,7, Octandiol-1,8, Nonandiol-1,9, Decandiol-1,10, Oligomere des Ethylenoxids und 1,2-Propylenoxids wie Di-, Tri- und Tetraethylenglykol, Di- und Tetrapropylenglykol.

Zur Verzweigung können auch geringe Mengen an Trimethylolethan und -propan sowie Pentaerythrit eingesetzt werden.

Vorzugsweise werden keine weiteren Polyole oder nur Hexandiol-1,6 mitverwendet.

4. Zur Umsetzung mit den Polyethern der ersten Reaktionsstufe können folgende Verbindungen verwendet werden:

Diarylcarbonate wie Diphenyl-, Ditolyl-, Dixylyl-, Dinaphthyl-carbonat, Dialkylcarbonate wie Diethyl-, Dipropyl-, Dibutyl-, Diamyl-, Dicyclohexyl-carbonat, Dioxolanone wie Ethylen- und Propylencarbonat, Hexandiol-1,6-bischlorkohlensäureester, Phosgen und Harnstoff.

Bevorzugt wird Diphenylcarbonat verwendet.

Die erfindungsgemäßen Polyether-Polycarbonate können in allgemeiner Weise wie folgt hergestellt werden:

Hexandiol, gegebenenfalls im Gemisch mit einem der angeführten $\alpha,\Omega$-Diole, wird mit dem Katalysator, bevorzugt Naphthalin-1,5-disulfonsäure, auf 150-200 °C erhitzt. Dabei wird in 3 bis 16 Stunden je nach Temperatur und Katalysatormenge die dem angestrebten Molekulargewicht (150-490) entsprechende Wassermenge abdestilliert. Die Kondensation kann entweder bei Normaldruck unter Überleiten von Stickstoff oder unter Einleiten eines Inertgases ($N_2$ oder $CO_2$) in die Schmelze und/oder unter Verwendung eines Schleppmittels zur Aceotropen Abdestillation des Wassers oder im Vakuum (50-200 mbar) durchgeführt werden. Mit dem Kondensationswasser und gegebenenfalls dem Schleppmittel destilliert als Nebenprodukt Oxepan (Hexamethylenoxid) ab, dessen Menge je nach Kondensationsdauer und -Temperatur 2-6 Mol-% des eingesetzten Hexandiols beträgt.

Die niedrigste Nebenproduktbildung und auch die besten Farbzahlen für die Polyether werden durch aceotrope Abdestillation des Wassers erreicht. Als Schleppmittel können z. B. Toluol, Xylol, Benzinfraktionen. Cyclohexan, Chlorbenzol verwendet werden. Besonders gut ist das Oxepan selbst geeignet, da dessen Anwesenheit seine Neubildung aus Hexandiol etwas zurückdrängt. Die Menge des Schleppmitels wird so bemessen, daß das Reaktionsgemisch bei der Reaktionstemperatur dauernd am Sieden gehalten wird. Für Qualität und Ausbeute der Polyether ist es günstiger, bei niedrigeren Temperaturen zu arbeiten und dafür längere Reaktionszeiten in Kauf zu nehmen (z. B.: 170 °C/16 Stunden).

Nach Erreichen des angestrebten Kondensationsgrades (ermittelbar aus der abdestillierten Wassermenge) wird das Reaktionsgemisch auf unter 100 °C abgekühlt und mit 5-10 Gew.-% Wasser zur Hydrolyse etwaig gebildeter Sulfonsäureestergruppen 1-3 Stunden am Rückfluß gekocht. Danach wird der saure Katalysator mit wäßrigem Alkali oder mit Ammoniak neutralisiert. Nach Abdampfen von Wasser, Lösungsmittel und Ringether im Vakuum werden die festen, unlöslichen Salze der Sulfonsäure abfiltriert.

Man erhält leicht gelb gefärbte Flüssigkeiten oder niedrigschmelzende Wachse mit Molekulargewichten von 150-500, bestimmt nach der OH-Zahl, vorzugsweise mit MG von 180-400. Gegebenenfalls können die Polyether durch Destillation oder fraktionierte Extraktion in 1,6-Hexandiol, $\Omega,\Omega$-Dihydroxydihexylether und höhere Oligomere aufgetrennt werden.

Ebenso ist es möglich, das Molekulargewicht der Polyether durch Abdestillieren eines Teiles des nicht umgesetzten Hexandiols auf einen gewünschten höheren Wert einzustellen.

Die Polyether werden dann in der zweiten Reaktionsstufe bei Temperaturen von 120-220 °C, vorzugsweise von 130 -200 °C, und Drucken von 200 bis 1 mbar, mit Diphenyl-carbonat, unter Abdestillieren von Phenol kondensiert. Hierzu kann der Polyether aus der ersten Stufe gegebenenfalls nach einer der oben beschriebenen Vorbehandlung und/oder nach Vermischen mit Hexandiol und/oder gegebenenfalls einem weiteren Polyol eingesetzt werden. Die carbonatbildende Verbindung wird in einem definierten Unterschuß eingesetzt, so daß das angestrebte Molekulargewicht gemäß folgender Gleichung resultiert:

MG (Polycarbonat) = n x MG (Diol) + (n-1) x 26

Dabei bedeutet n die Molzahl des eingesetzten Diols und (n-1) die Molzahl der eingesetzten Carbonatbildenden Verbindung. 26 ist das MG der Carboxylgruppe vermindert um 2.

Die Umsetzung in der zweiten Reaktionsstufe kann durch Basen oder Übergangsmetallverbindungen katalysiert werden.

Die erhaltenen Polyetherpolycarbonate sind relativ niedrigviskose Flüssigkeiten oder niedrigschmelzende Wachse. Wird als Polyolkomponente nur 1,6-Hexandiol verwendet, so hängen die Erweichungspunkte der resultierenden Polyether-Polycarbonate vom Verhältnis Carbonatgruppen zu Ethergruppen ab. Beträgt dieses etwa 1,25:1, so wird ein Schmelzpunktminimum bei 18-22 °C (je nach Molgewicht) erreicht, d. h. solche Produkte sind bei Raumtemperatur flüssig und daher leichter handhabbar. Sie sind die bevorzugten Polyetherpoly-carbonate gemäß der vorliegenden Erfindung.

Die erfindungsgemäßen Polyether-Polycarbonate können insbesondere zu PU-Kunststoffen verarbeitet werden, die günstige Eigenschaften aufweisen. Neben den günstigen Verarbeitungseigenschaften der Polyetherpolycarbonate wegen ihrer relativ niedrigen Viskosität, insbesondere bei der Verarbeitung zu Polyisocyanat-Präpolymeren, ergeben sie PU mit sehr guter Elastizität, Zugfestigkeit, Weiterreißfestigkeit und Bruchdehnung. Außerdem PU mit einer guten Flexibilität bei niedrigen Temperaturen und sehr niedrigen Einfriertemperaturen. Solche PU erhält man auch beim Einsatz von Polyether-Polycarbonaten, deren Erweichungspunkte oberhalb 30 °C liegen. Außerdem zeigen die PU eine gute Resistenz gegen hydrolytische und bakterielle Einflüsse.

I. Zur Herstellung der Polyurethan-Kunststoffe werden neben den erfindungsgemäßen Polyether-Polycarbonaten, gegebenenfalls als höhermolekulare Hydroxylverbindungen, folgende Verbindungen eingesetzt:

Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 500 bis 8.000, vorzugsweise 700 bis 6.000, z. B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. $\epsilon$-Caprolacton, oder aus Hydroxycarbonsäuren, z. B. $\omega$-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder

-(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 983 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

c) Unter den Polythioethern seien insbesondere die Kondensationsprodukte von Thiodiglykol mit sich selbst und/oder mit anderen Glykolen, dicarbonsäuren, Formaldehyd, Aminocarbonsäuren oder Aminoalkoholen angeführt. Je nach den Co-Komponenten handelt es sich bei den Produkten z. B. um Polythiomischether, Polythioetherester oder Polythioetheresteramide.

d) Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyether-und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt werden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400-10.000, z. B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

II. Gegebenenfalls als niedermolekulare Kettenverlängerer:

Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantiol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4′-Dihydroxy-diphenylpropan, Dihydroxymethyl-hydrochinon, Ethanolamin, Diethanolamin, N-Methyldietanolamin, Triethanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638

759).

Erfindungsgemäß geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z. B. β-Semicarbazido-propionsäurehydrazid (DE-Offenlegungsschrift 1 770 591), Semicarbazido-alkylencarbazinester wie z. B. 2-Semicarbazidoethyl-carbazinester (DE-Offenlegungsschrift 1 918 504) oder auch Amino-semicarbazid-Verbindungen wie z. B. β-Aminoethyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß der DE-Offenlegungsschriften 2 040 644 und 2 160 590, 3,5-und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 365 und 3 736 295), gegebenenfalls in 5-Stellung substituierte 2-Halogen-1,3-Phenylendiamine (DE-Offenlegungsschriften 2 001 772, 2 025 896), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol, Ethylenglykolmonoethylether.

Als weitere erfindungsgemäß geeignete niedermolekulare Polyole vom Molekulargewicht bis 400 Esterdiole der allgemeinen Formeln

$HO-(CH_2)_x-CO-O-(CH_2)_y-OH$ und
$HO-(CH_2)_x-O-CO-R-CO-O-(CH_2)_x-OH$

in denen

R einen Alkylrest mit 1-10, vorzugsweise 2-6, C-Atomen bzw. einen Cycloalkylen- oder Arylenrest mit 6-10 C-Atomen,
X = 2-6 und
Y = 3-5

bedeuten,
z. B. δ-Hydroxybutyl-ε-hydroxy-capronsäureester, ω-Hydroxyhexyl-γ-hydroxybuttersäureester, Adipinsäure-bis-(β-hydroxyethyl)ester und Terephthalsäure-bis-(β-hydroxyethyl)ester; Diolurethane der allgemeinen Formel

$HO-(CH_2)_x-O-CO-NH-R'-NH-CO-O-(CH_2)_x-OH$

in der

R' einen Alkylenrest mit 2-15, vorzugsweise 2-6, C-Atomen oder einen Cycloalkylen- oder Arylenrest

mit 6-15 C-Atomen und

x eine Zahl zwischen 2 und 6

darstellen,

z. B. 1,6-Hexamethylen-bis-($\beta$-hydroxyethylurethan) oder 4,4'Diphenylmethan-bis-($\delta$-hydroxybutylurethan); sowie Diolharnstoffe der allgemeinen Formel

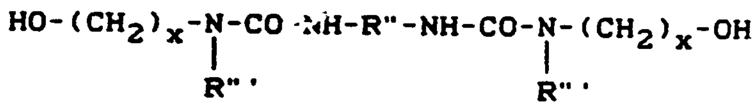

in der

R'' einen Alkylenrest mit 2-15, vorzugsweise 2-9, C-Atomen oder einen Cycloalkylen- oder Arylenrest mit 6-15 C-Atomen,

R''' Wasserstoff oder eine Methylgruppe und

x die Zahlen 2 oder 3

bedeuten,

z. B. 4,4'-Diphenylmethan-bis-($\beta$-hydroxyethylharnstoff) oder die Verbindung

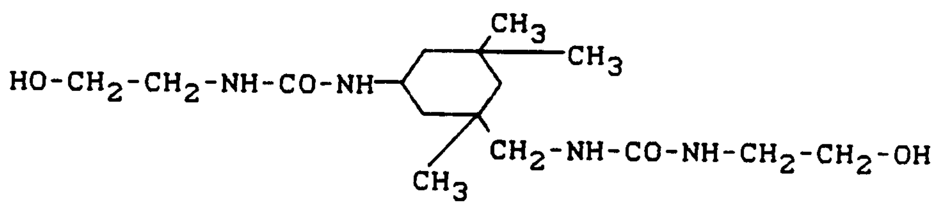

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butandiol-1,4 bzw. dessen Alkoxylierungsprodukte.

III. Als Di- und/oder Polyisocyanate:

Aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$Q\,(NCO)_n$

in der

n = 2-4, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen
oder einen araliphatischen Kohlenwasserstoffrest mit 8-15, vorzugsweise 8-13 C-Atomen,

bedeuten, z. B. Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4′,4″-triisocyanat, Polyphenyl-polymethylen-polyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisatinsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4′- und/oder 2,4′-Diphenylmethandiisocyanat ableiten.

Besonders bevorzugt werden Naphthalin-1,5-diisocyanat, 4,4′-Diphenylmethan-diisocyanat und Toluylendiisocyanat (80 % 2,4- und 20 % 2,6-Isomeres).

IV. Gegebenenfalls als Hilfs- und Zusatzmittel:

a) Wasser und/oder leicht flüchtige anorganische oder organische Substanzen als Treibmittel. Als organische Treibmittel kommen z. B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z. B. Luft, $CO_2$ oder $N_2O$ in Frage. Eine Treibwirkung kann auch durch Zusatz von bei Temperaturen über Raumtemperatur unter Abspaltung von Gasen, beispielsweise von Stickstoff, sich zersetzenden Verbindungen z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Katalysatoren der an sich bekannten Art, z. B. tertiäre Amine, wie Triethylamin, Tributylamin, N-Methyl-morpholin, N-Ethyl-morpholin, N,N,N′,N′-Tetramethyl-ethylendiamin, Pentamethyl-Diethylentriamin und höhere Homologe (DE-Offenlegungsschriften 2 624 527 und 2 624 528), 1,4-Diaza-bicyclo-(2,2,2)-octan, N-Methyl-N′-dimethylaminoethylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diethylbenzylamin, Bis-(N,N-diethylaminoethyl)-adipat, N,N,N′,N′-Tetramethyl-1,3-butandiamin, N,N-Dimethyl-$\beta$-phenylethylamin, 1,2-Dimethylimidazol, 2-Methylimidazol, monocyclische und bicyclische Amidine (DE-Offenlegungsschrift 1 720 633), Bis-(dialkylamino)alkylether (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als

Katalysatoren kommen auch an sich bekannten Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B. Triethanolamin, Triisopropanolamin, N-Methyl-diethanolamin, N-Ethyl-diethanolamin, N,N-Diethylethanolamin, deren Umsetzungsprodukte mit Alkylenoxiden wie Propylenoxid und/oder Ethylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Dieethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z. B. sauer reagierende Stoffe wie Salzesäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München

1966, z. B. auf den Seiten 103 bis 113 beschrieben.

Zur Herstellung der Polyurethan-Kunststoffe werden die Reaktionskomponenten nach dem an sich bekannten Einstufenverfahren, dem Prepolymerverfahren oder dem Semiprepolymerverfahren, zur Umsetzung gebracht, wobei man sich oft maschineller Einrichtungen bedient, z. B. solcher, die in der US-Patentschrift 2 764 565 beschrieben werden. Einzelheiten über Verarbeitungsrichtungen, die auch erfindungsgemäß in Frage kommen, werden im Kunststoff-Handbuch, Band VII, herausgegeben von Vieweg und Höchtlen, Carl-Hanser-Verlag, München, 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z. B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z. B. aus den DE-Offenlegungsschriften 2 121 670 und 2 307 589 bekanntgeworden sind.

Erfindungsgemäß lassen sich auch kalthärtende Schaumstoffe herstellen (bgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z. B. folgende Anwendung:
Walzenbeläge, vor allem in der Druckindustrie, Hydrozyklone, Rohrauskleidungen, Verschleißschutz in wäßrigen Medien.

## Beispiele

Ether-Vorprodukte (Polyether)

### Beispiel I

In einem 100 l-Rührwerksbehälter aus V4A-Stahl mit geregelter Dampf-Manteilheizung, Kolonne und Aceotropabscheider wurden 70.8 kg (600 Mol) Hexandiol-1,6, 0,5 Kg Schwefelsäure und 3,5 l Toluol zum Sieden erhitzt. Ab 160 °C Sumpftemperatur begann im Destillat die Ausscheidung von Wasser. Durch Einstellen der Toluolmenge wurde die Sumpftemperatur konstant auf 170 °C gehalten. Im Verlauf von 11 h wurden 6,41 kg (356 Mol) Kondensationswasser erhalten. Dann wurde auf 90 °C abgekühlt und mit 5 l Wasser 3 h lang verrührt. Nach Neutralisation mit 20 %iger Natronlauge auf PH 7 wurden im Vakuum bis zu einer Temperatur von 130 °C (15 mbar) alle flüchtigen Bestandteile abdestilliert. Danach wurde durch Druckfiltration Natriumsulfat abgetrennt. Man erhielt eine bei Raumtemperatur langsam erstarrende ölige, gelbliche Flüssigkeit mit einer OH-Zahl von 424,4, entsprechend einem Molekulargewicht von 264,4 und einem Ethergruppengehalt von 1,969 Mol pro Mol Produkt. Ausbeute 62,8 kg (96,8 % d. Th.).

Ein Anteil von 8 kg wurde der fraktionierten Destillation bei 0,5 mbar unterworfen und ergab: 1,45 kg Hexandiol (18,13 %), 3,18 kg Dihydroxy-dihexylether (39,8 %) und 3,37 kg Oligoether.

### Beispiel II

In einem 6 l-Vierhalskolben mit Rührer, Kontaktthermometer, Kolonne und Wasserabscheider wurden 1.770 g (15 Mol) Hexandiol-1,6 und 2.400 g (15 Mol) Nonandiol-1,9 zusammen mit 12 g Naphthalin-1,5-disulfonsäure und Toluol (wiedergewonnen aus Beispiel I mit einem Gehalt von etwa 20 % Oxepan) erhitzt. Durch Zugabe oder Abnahme von Lösungsmittel wurde die Temperatur im Verlauf von 12 h unter dauerndem Sieden auf 175-177 °C gehalten. Dabei wurden 252 g (14 Mol) Wasser im Abscheider erhalten. Nach Abkühlen wurde der Kolbeninhalt mit 200 ml Wasser 2 h bei 90 °C verrührt und dann durch Einleiten

von Ammoniak-gas neutralisiert. Nach Abdampfen aller flüchtigen Bestandteile bis 130 °C, 12 mbar, wurde das Ammoniumsulfonat abfiltriert. Es wurde ein helles, niedrigschmelzendes Wachs der OH-Zahl 452 (Molekulargewicht 248) erhalten.
Ethergruppen-Gehalt: 0,92 Mol pro Mol Produkt.

Beispiel III-VIII

Analog Beispiel I bzw. II wurden die in der folgenden Tabelle 1 zusammengefaßten Ausgangsprodukte im 100 l-Kessel hergestellt. Als Ausgangsprodukt wurde ausschließlich Hexandiol-1,6 und als Katalysator jeweils 0,37 Gew.-% Naphthalin-1,5-disulfonsäure eingesetzt. Das Lösungsmittel Toluol wurde jeweils wieder eingesetzt, wobei der Anteil an Oxepan jeweils in abnehmendem Maße anstieg.

Die Produktausbeuten betrugen 96,5-98 % (je nach MG). Die Neutralisation erfolgte in allen Fällen mit Ammoniak.

**Tabelle I**

| Beispiel | Veretherungszeit (Stdn.) | Temperatur °C | OH-Zahl | Molekulargewicht | Ethergruppen pro Mol |
|---|---|---|---|---|---|
| III | 21 | 180 | 225,8 | 497 | 3,79 |
| IV | 12,5 | 170 | 418 | 268,4 | 1,5 |
| V | 9,3 | 170 | 445,2 | 252 | 1,34 |
| VI | 5,5 | 170 | 594,9 | 188,6 | 0,706 |
| VII | 6 | 170 | 578,4 | 194 | 0,76 |
| VIII | 13,5 | 180 | 259,1 | 433 | 3,15 |

Herstellung der Polyether-Polycarbonate

Beispiel 1

In einem 100 l-Rührwerksbehälter aus V4A-Stahl mit regelbarer Dampf-Mantelbeheizung, Füllkörperkolonne (2 m Höhe, 10 cm Durchmesser), auf 50 °C beheiztem Kondensator und Vorlage wurden 55,524 kg (210 Mol) Ether-Vorprodukt I und 38,52 kg (180 Mol) Diphenylcarbonat mit 1 g Dibutylzinnoxid als Katalysator bei 15 mbar erhitzt. Ab einer Sumpftemperatur von 135 °C begann Phenol abzudestillieren. Die Kondensation wurde nun etwa 6 h bei dieser Temperatur vorangetrieben. In dieser Phase destillierte etwa

die Hälfte der theoretischen Menge Phenol ab. Danach wurde während weiterer 6 h die Temperatur allmählich auf 200 °C gesteigert und so lange auf dieser Höhe belassen (2 h), bis kein Phenol mehr abdestillierte (Menge bis dahin: 32,9 kg = 97,2 %). Anschließend wurde mittels Ölpumpe der Druck auf 2 mbar abgesenkt und in weiteren 3 h bei 200 °C unter Vervollständigung der Kondensation restliches Phenol abdestilliert.

Man erhielt ein niedrigschmelzendes, schwach verfärbtes Wachs mit folgenden Daten:
OH-Zahl: 55,8
Molekulargewicht: 2.011
Erweichungspunkt: 31 °C
Verhältnis von Ethergruppen zu Carbonatgruppen: 1:0,585
Viskosität: 8.440 mPa.s bei 50 °C

Beispiel 2

Analog Beispiel 1 wurden im 4 l-Vierhalskolben 1.809 g (8,3 Mol) Dihydroxy-dihexylether aus Beispiel I mit 1.562 g (7,3 Mol) Diphenylcarbonat kondensiert. Man erhielt ein fast farbloses Wachs mit folgenden Daten:
OH-Zahl: 56,3
Molekulargewicht: 2.000
Erweichungspunkt: 32 °C
Verhältnis von Ethergruppen zu Carbonatgruppen: 1:0,875

Ether- und Carbonatgruppen sind in dem Produkt alternierend angeordnet. Der Erweichungspunkt ist wegen des regelmäßigen Aufbaus etwas höher als bei Produkten mit vergleichbarer aber statistischer Anordnung der Gruppierungen.

Beispiel 3

Analog Beispiel 1 wurden 2.684 kg (10 Mol) Ether-Vorprodukt aus Beispiel IV und 624 kg (6 Mol) Pentandiol-1,5 mit 2.996 g (14 Mol) Diphenylcarbonat kondensiert. Man erhielt ein Polyether-Polycarbonat mit folgenden Daten:
OH-Zahl: 61,2
Molekulargewicht: 1.840
Erweichungspunkt: > 21 °C (schmalzartig)
Verhältnis von Ethergruppen zu Carbonatgruppen: 1:0,93
Viskosität: 3.400 mPa.s bei 50 °C

Beispiel 4

Analog Beispiel 1 wurden 2.480 g (10 Mol) Ether-Vorprodukt aus Beispiel II mit 1.712 g (8 Mol) Diphenylcarbonat kondensiert. Man erhielt ein Polyether-Polycarbonat mit folgenden Eigenschaften:
OH-Zahl: 83,5
Molekulargewicht: 1.340
Erweichungspunkt: 26 °C
Verhältnis von Ethergruppen zu Carbonatgruppen: 1:0,87
Viskosität: 1.200 mPa.s bei 50 °C

Beispiele 5-10

Die folgenden Produkte wurden alle im 100 l-Kessel analog Beispiel 1 hergestellt. Variiert wurden das Molekulargewicht und Verhältnis von Ethergruppen zu Carbonatgruppen. Zum Einsatz gelangten die Vorprodukte der Beispiele III bis VIII und Hexandiol-1,6 in Abmischungen (Ausnahme Beispiel 5). Anstelle der Absolutmengen sind in der folgenden Tabelle 2 die Molverhältnisse der Reaktionspartner angegeben:

**Tabelle 2**

| Bsp. | Vorprodukt aus Beispiel in Mol III | IV | V | VI | VII | VIII | Hexandiol Mol | Diphenylcarbonat Mol | OH-Zahl | MG | Ethergr. : Carbonatgr. | Erweichungspunkt | Visk. bei 50° C mPa.s |
|---|---|---|---|---|---|---|---|---|---|---|---|---|---|
| 5 | 6 | - | - | - | - | - | - | 5 | 36,0 | 3100 | 1:0,22 | 39° C | 4.100 |
| 6 | - | 2,09 | - | - | 4,38 | - | 2,75 | 8,22 | 58,5 | 1920 | 1:1,27 | 19° C | 3.520 |
| 7 | - | 1,68 | - | - | 2,85 | - | 2,22 | 5,75 | 75,4 | 1490 | 1:1,27 | 18° C | 1.720 |
| 8 | - | 1,55 | - | 2,11 | - | - | 7,2 | 9,86 | 58,4 | 1920 | 1:2,7 | 32° C | 4.750 |
| 9 | - | - | 2,73 | - | - | 1,48 | 1,98 | 5,18 | 63,1 | 1780 | 1:0,65 | 34° C | 1.830 |
| 10 | 0,15 | - | 1,26 | - | - | 0,62 | 1,57 | 2,6 | 111,2 | 1010 | 1:0,64 | 31° C | 600 |

Herstellung von Polyurethanelastomeren

Beispiele A - C

PU-Elastomeren mit guter Belastbarkeit, Verschließfestigkeit, Hydrolysenbeständigkeit und gleichzeitig gutem Tieftemperaturverhalten wurden unter Verwendung der erfindungsgemäßen Polyether-Polycarbonatdiolen und Naphthylen-1,5-diisocyanat hergestellt.

Beispiel A

960 g (0,5 Mol) des in Beispiel 8 beschriebenen Diols wurden auf ca. 125 °C erwärmt, mit 210 g (1,00 Mol) Naphthylen-1,5-diisocyanat versetzt, sofort intensiv verrührt und nach 2 Minuten im Vakuum entgast. In einer exothermen Reaktion entstand nach ca. 15 Minuten ein NCO-Prepolymer. In dieses Prepolymer wurden als Vernetzer 33 g (0,733 Mol) 1,4-Butandiol eingerührt. Das reagierende Gemisch wurde innerhalb von 1 Minuten in auf 110 °C vorgewärmte Formen gegossen und erstarrte darin nach wenigen Minuten.

Das resultierende Elastomer wurde 24 Stunden bei 110 °C nachgetempert und anschließend 7 Tage bei Raumtemperatur gelagert.

Es entstand ein Elastomer mit den in Tabelle 3 wiedergegebenen Eigenschaften.

Beispiel B

960 g (0,5 Mol) des in Beispiel 6 beschriebenen Diols wurden auf ca. 125 °C erwärmt, mit 210 g (1,00 Mol) Naphthylen-1,5-diisocyanat versetzt, sofort intensiv verrührt und nach 2 Minuten im Vakuum entgast. In einer exothermen Reaktion entstand nach ca. 15 Minuten ein NCO-Prepolymer. In dieses Prepolymer wurden als Vernetzer 33 g (0,733 Mol) 1,4-Butandiol eingerührt. Das reagierende Gemisch wurde innerhalb von 1 Minute in auf 110 °C vorgewärmte Formen gegossen und erstarrte darin nach wenigen Minuten.

Das resultierende Elastomer wurde 24 Stunden bei 110 °C nachgetempert und anschließend 7 Tage bei Raumtemperatur gelagert.

Es entstand ein Elastomer mit den in Tabelle 3 wiedergegebenen Eigenschaften.

Beispiel C

890 g (0,5 Mol) des in Beispiel 9 beschriebenen Diols wurden auf ca. 125 °C erwärmt, mit 180 g (0,857 Mol) Naphthylen-1,5-diisocyanat versetzt, sofort intensiv verrührt und nach 2 Minuten im Vakuum entgast. In einer exothermen Reaktion entstand nach ca. 15 Minuten ein NCO-Prepolymer. In dieses Prepolymer wurden als Vernetzer 20 g (0,444 Mol) 1,4-Butandiol eingerührt. Das reagierende Gemisch wurde innerhalb von 1 Minute in auf 110 °C vorgewärmte Formen gegossen und erstarrte darin nach wenigen Minuten.

Das resultierende Elastomer wurde 24 Stunden bei 110 °C nachgetempert und anschließend 7 Tage bei Raumtemperatur gelagert.

Es entstand ein Elastomer mit den in Tabelle 3 wiedergegebenen Eigenschaften.

Die Elastomeren nach Beispielen A - C besitzen eine bemerkenswert niedrige Glasübergangstemperatur, hohen Weiterreißwiderstand, extrem geringen Abrieb sowie gute Dämpfungs- bzw. Modulwerte und eine sehr gute Hydrolysenbeständigkeit. Quellungsversuche in verschiedenen Chemikalien (Tabelle 4) zeigen eine insgesamte gute Quellbeständigkeit. Außer in Aromaten (Toluol, ASTM ÖL III) ist das Quellverhalten Esterurethanen (Vergleichsbeispiele $\alpha$ und $\beta$) überlegen oder ebenbürtig.

Vergleichsbeispiel $\alpha$

1.000 g (0,5 Mol) eines Polyethylenadipatdiols mit einem mittleren Molgewicht von 2.000 wurden auf ca. 125 °C erwärmt, mit 180 g (0,857 Mol) Naphthylen-1,5-diisocyanat versetzt, sofort intensiv verrührt und nach 2 Minuten im Vakuum entgast. In einer exothermen Reaktion entstand nach ca. 15 Minuten ein NCO-Prepolymer. In dieses Prepolymer wurden als Vernetzer 20 g (0,444 Mol) 1,4-Butandiol eingerührt. Das reagierende Gemisch wurde innerhalb von 1 Minute in auf 110 °C vorgewärmte Formen gegossen und erstarrte darin nach wenigen Minuten.

Das resultierende Elastomer wurde 24 Stunden bei 110 °C nachgetempert und anschließend 7 Tage bei Raumtemperatur gelagert.

Es entstand ein Elastomer mit den in Tabelle 3 wiedergegebenen Eigenschaften.

Vergleichsbeispiel $\beta$

1.000 g (0,5 Mol) eines hydroxyfunktionellen Polyesters, hergestellt aus Adipinsäure, 1,6-Hexandiol und Neopentylglykol mit einem mittleren Molgewicht von 2.000, wurden auf ca. 125 °C erwärmt, mit 180 g (0,857 Mol) Naphthylen-1,5-diisocyanat versetzt, sofort intensiv verrührt und nach 2 Minuten im Vakuum entgast. In einer exothermen Reaktion entstand nach ca. 15 Minuten ein NCO-Prepolymer. In dieses Prepolymer wurden als Vernetzer 20 g (0,444 Mol) 1,4-Butandiol eingerührt. Das reagierende Gemisch wurde innerhalb von 1 Minute in auf 110 °C vorgewärmte Formen gegossen und erstarrte darin nach wenigen Minuten.

Das resultierende Elastomer wurde 24 Stunden bei 110 °C nachgetempert und anschließend 7 Tage bei Raumtemperatur gelagert.

Es entstand ein Elastomer mit den in Tabelle 3 wiedergegebenen Eigenschaften.

Tabelle 3

| Beispiel Nr. / Vergleichsbeispiel Nr. | A | B | C | α | β |
|---|---|---|---|---|---|
| Shore A-Härte (DIN 53505) | 92 | 91 | 94 | 82 | 79 |
| Shore D-Härte (DIN 53505) | 36 | 35 | 37 | 29 | - |
| Abriebverlust (DIN 53516) ($mm^3$) | 30 | 25 | 24 | 40 | 46 |
| Torsionsschwingungsversuch (DIN 53445) | | | | | |
| Geasübergangstemperatur (°C) - | -44 | -49 | -53 | -40 | -45 |
| Dämpfungsmaximum (°C) - | -30 | -38 | -28 | -25 | -28 |
| -Modul bei 20°C (MPa) | 27 | 34 | 35 | 16 | 12 |
| Dämpfung bei 20°C | 0,03 | 0,03 | 0,03 | 0,05 | 0,04 |
| -Modul bei 110°C (MPa) | 28 | 33 | 34 | 18 | 13 |
| Dämpfung bei 110°C | 0,02 | 0,02 | 0,02 | 0,04 | 0,03 |
| Weiterreißwiderstand (Graves)/(DIN 53515) (kN/m) | 61 | 52 | 65 | 49 | 32 |
| Bruchspannung (DIN 53504) (MPa) | 45 | 30 | 43 | 55 | 36 |
| Compression Set (70°C) (ASTM 385/B) | 21 | 21 | 23 | 22 | 26 |
| Stoßelastizität (DIN 53512) (%) | 57 | 57 | 56 | 53 | 56 |
| Bruchspannung nach 14 Tagen in Wasser bei 80°C (DIN 53504) (MPa) | 38 | 33 | 31 | zerstört | 10 |
| Shore A-Härte nach 14 Tagen in Wasser bei 80°C (DIN 53505) | 91 | 91 | 93 | zerstört | 70 |

**Tabelle 4**

**QUELLUNG IN LÖSUNGSMITTELN (28 d Immersion)**

**Stopfen 29 mm Durchmesser, 12,5 mm hoch**

| Beispiel Nr. / Vergleichsbeispiel Nr. | | | A | B | C | α | β |
|---|---|---|---|---|---|---|---|
| ASTM Öl I | RT | Gewichtszunahme (%) | 0,21 | 0,2 | 0,2 | 0 | 0 |
| | | Volumenzunahme (%) | 0 | 0 | 0,5 | 0 | 0 |
| | | Härte Shore A | 93 | 93 | 93 | - | 79 |
| ASTM Öl II | RT | Gewichtszunahme (%) | 0,3 | 1,3 | 1,4 | 0,4 | 0,7 |
| | | Volumenzunahme (%) | 0,4 | 0,3 | 0,3 | 0,4 | 0,5 |
| | | Härte Shore A | 93 | 93 | 93 | - | 79 |
| ASTM Öl III | RT | Gewichtszunahme (%) | 2,2 | 3,6 | 4,3 | 0,4 | 2,2 |
| | | Volumenzunahme (%) | 1,4 | 2,4 | 4,6 | 0,9 | 3,2 |
| | | Härte Shore A | 93 | 92 | 93 | - | 79 |
| Aceton | RT | Gewichtszunahme (%) | 43 | 40 | 39 | 64 | 79 |
| | | Volumenzunahme (%) | 59 | 55 | 50 | 98 | 101 |
| | | Härte Shore A | 83 | 85 | 85 | - | 60 |
| Toluol | RT | Gewichtszunahme (%) | 72 | 74 | 76 | 36 | 91 |
| | | Volumenzunahme (%) | 91 | 92 | 94 | 53 | 115 |
| | | Härte Shore A | 82 | 83 | 82 | - | 61 |
| $H_2O$ | RT | Gewichtszunahme (%) | 0 | 0,3 | 0 | 1,3 | 0,6 |
| | | Volumenzunahme (%) | 0 | 0 | 0 | 1,9 | 0,3 |
| | | Härte Shore A | 93 | 93 | 93 | - | 79 |
| Ethylacetat | RT | Gewichtszunahme (%) | 53 | 51 | 50 | 58 | 86 |
| | | Volumenzunahme (%) | 65 | 63 | 60 | 77 | 99 |
| | | Härte Shore A | 83 | 85 | 85 | - | 60 |
| Natriumhydrogensulfit | | Gewichtszunahme (%) | 1,3 | 0,8 | 1,1 | zerstört | zerstört |
| 10 %, 80°C | | Volumenzunahme (%) | 3,0 | 2,4 | 2,9 | " | " |
| | | Härte Shore A | 91 | 91 | 91 | " | " |

Beispiel D

Herstellung eines sehr harten Elastomers mit guter Belastbarkeit, Hydrolysenbeständigkeit und gleichzeitig gutem Tief- und Hochtemperaturverhalten unter Verwendung der erfindungsgemäßen Polyether-Polycarbonatdiolen und 4,4'-Diphenylethandiisocyanat (MDI).

Beispiel $D_1$

Herstellung einer Prepolymers aus dem in Beispiel 1 beschriebenen Polyethercarbonatdiol (1.000 - 0,5 Mol) und MDI (610 g - 2,44 Mol).

Flüssiges MDI wurde bei 70 °C vorgelegt das Polyol (40 °C) langsam unter Rühren zugegeben und 3 h nachgerührt. Die Temperatur stieg nicht über 85 ° C.

Das fertige Prepolymer wurde anschließend unter Vakuum bei 85 °C entgast.

| | | |
|---|---|---|
| NCO-Gehalt | theoretisch<br>gefunden | 10 %<br>9,76 % |

Beispiel $D_2$

1.000 g (2,324 Mol NCO) des oben beschriebenen Prepolymers $D_1$ wurden auf ca. 100 ° C erwärmt und unter Vakuum entgast. In dieses Prepolymer wurden als Vernetzer (260 g) 4-Chlor-3,5-diaminobenzoesäureisobutylester bei 90 °C eingerührt. Das reagierende Gemisch wurde innerhalb von 1 Minute in auf 110 °C vorgewärmte Formen gegossen und erstarrte darin nach wenigen Minuten.

Das resultierende Elastomer wurde 24 h bei 110 °C nachgetempert und anschließend 7 Tage bei Raumtemperatur gelagert. Es entstand ein Elastomer mit den in Tabelle 5 wiedergegebenen Eigenschaften. Das Elastomer besitzt eine bemerkenswert niedrige Glasübergangstemperatur, hohen Weiterreißwiderstand, relativ geringen Abrieb sowie gute Dämpfungs- bzw. Modulwerte. Die Wärmebeständigkeit und Hydrolysenbeständigkeit sind außerordentlich gut.

**Tabelle 5**

**EIGENSCHAFTEN DER ELASTOMERE BASIEREND AUF MDI**

**Beispiel $D_2$**

| | | | | | |
|---|---|---|---|---|---|
| Shore D-Härte | (DIN 53505) | | 65 | | |
| Shore A-Härte | (DIN 53505) | | 96 | | |
| Abriebverlust | (DIN 53516) | ($mm^3$) | 44 | | |
| Stoßelastizität | (DIN 53512) | (%) | 46 | | |
| Weiterreißwiderstand | (DIN 53515) | (kN/m) | 136 | | |
| Bruchspannung | (DIN 53504) | (MPa) | 40 | Bruchspannung nach 15 Wochen in Wasser bei 70°C | 34 MPa |
| Torsionsschwingungsversuch | (DIN 53445) | | | | |
| Glasübergangstemperatur | | (°C) | -55 | Härte Shore A/D nach 15 Wochen in Wasser bei 70°C | 98/64 |
| -Modul -30°C | | (MPa) | 642 | | |
| 20°C | | (MPa) | 306 | | |
| 70°C | | (MPa) | 204 | | |
| 110°C | | (MPa) | 173 | | |
| Dämpfung -30°C | | | 0,06 | | |
| 20°C | | | 0,05 | | |
| 70°C | | | 0,05 | | |
| 110°C | | | 0,04 | | |
| Tensile Heat Distortion ASTM D 648-B 0,45 MPa | | (°C) | > 200 | | |

Beispiele E und F

Herstellung von Elastomeren mit guter Belastbarkeit, Verschleißfestigkeit, Hydrolysenbeständigkeit und gleichzeitig gutem Tieftemperaturverhalten unter Verwendung der erfindungsgemäßen Polyether-Polycarbonatdiolen und Toluenediisocyanat (TDI).

Beispiel $E_1$

Es wurde aus dem in Beispiel 7 beschriebenen Polyethercarbonatdiol ein Prepolymer durch Umsetzung mit überschüssigem TDI (80 % 2,4 TDI und 20 % 2,6 TDI) hergestellt. Um den Gehalt an freiem TDI möglichst niedrig zu halten, wurde das Prepolymer anschließend gedünnschichtet.

| | | |
|---|---|---|
| Kenndaten | NCO-Gehalt<br>Viskosität bei 70 °C<br>freies TDI | 4,30 %<br>2.250 mPa.s<br>0,2 % |

Beispiel $E_2$

1.000 g des in Beispiel $E_1$ beschriebenen Prepolymers wurden auf ca. 100 °C erwärmt und mit (122,5 g) 4-Chlor-3,5-diaminobenzoesäureIsobutylester (90 °C) als Vernetzer vermischt. Das reagierende Gemisch wurde innerhalb von 1 Minute in auf 110 °C vorgewärmte Formen gegossen und erstarrte darin nach wenigen Minuten.

Das resultierende Elastomer wurde 24 h bei 110 °C nachgetempert und anschließend 7 Tage bei Raumtemperatur gelagert. Es entstand ein Elastomer mit den in Tabelle 6 wiedergegebenen Eigenschaften.

Beispiel $F_1$

Es wurde aus dem in Beispiel 10 beschriebenen Polyether-Polycarbonatdiol ein Prepolymer durch Umsetzung mit überschüssigem TDI (80 % 2,4 TDI und 20 % 2,6 TDI) hergestellt. Um den Gehalt an freiem TDI möglichst niedrig zu halten wurde das Prepolymer anschließend gedünnschichtet.

| | | |
|---|---|---|
| Kenndaten | NCO-Gehalt<br>Viskosität bei 70 °C<br>freies TDI | 6,1 %<br>1.500 mPa.s<br>0,3 % |

Beispiel $F_2$

1.000 g des in Beispiel $F_1$ beschriebenen Prepolymers wurden auf ca. 100 °C erwärmt und mit (165 g) 4-Chloro-3,5-diaminobenzoesäure Isobutylester (90 °C) als Vernetzer vermischt. Dieses reagierende Gemisch wurde innerhalb von 1 Minute in auf 110 °C vorgewärmte Formen gegossen und erstarrte darin in wenigen Minuten.

Das resultierende Elastomer wurde 24 Stunden bei 110 °C nachgetempert und anschließend 7 Tage bei Raumtemperatur gelagert.

Es entstand ein Elastomer mit den in Tabelle 6 wiedergegebenen Eigenschaften.

Vergleichsbeispiel $\gamma$ und $\delta$

Ähnliche monomerenarme Polyester-TDI-Prepolymere:
Desmodur VP PU 0137® und
Desmodur VP PU 0127®.

| Kenndaten: | | |
|---|---|---|
| PU 0137 | NCO-Gehalt<br>Viskosität bei 70 °C<br>freies TDI | 3,4 ± 0,2 %<br>ca. 2.500 mPa.s<br>unter 0,5 % |
| PU 0127 | NCO-Gehalt<br>Viskosität bei 70 °C<br>freies TDI | 6,8 ± 0,3 %<br>ca. 1.500 mPa.s<br>unter 0,5 % |

Durch Abmischung dieser zwei Prepolymer kann der NCO-Gehalt im Bereich von 3,4 % und 6,8 % beliebig eingestellt werden. So weist z. B. eine Mischung von PU 0137 (3) : PU 0127 (1) einen NCO-Gehalt von 4,7 % auf (entspricht ungefähr dem Prepolymer in Beispiel E) und eine Mischung von PU 0127 (3): PU 0137 (1) weist einen NCO-Gehalt von ca. 5,8 % auf (entspricht dem NCO-Gehalt in Beispiel F).

Vergleichsbeispiel $\gamma$

Analog Beispiel E wurde die obige Mischung mit 4,7 % NCO (1.000 g) mit (113 g) 4-Chloro-3,5-diamonobenzoesäure Isobutylester umgesetzt.

Vergleichsbeispiel $\delta$

Analog Beispiel F wurde die obige Mischung mit 5,8 % NCO (1.000 g) mit 4-Chloro-3,5-diaminobenzoesäure-isobutylester umgesetzt.

**Tabelle 6**

**EIGENSCHAFTEN DER ELASTOMERE BASIEREND AUF TDI**

| Beispiel Nr. / Vergleichsbeispiel Nr. | | | $E_2$ | $F_2$ | γ | δ |
|---|---|---|---|---|---|---|
| Shore A-Härte | (DIN 53505) | | 93 | 98 | 93 | 96 |
| Shore D-Härte | (DIN 53505) | | 43 | 55 | 41 | 54 |
| Abriebverlust | (DIN 53516) | ($mm^3$) | 28 | 25 | 46 | 42 |
| Torsionsschwingungsversuch | (DIN 53445) | | | | | |
| Glasübergangstemperatur | | (°C) | -48 | -50 | - | - |
| -Modul bei 20°C | | (MPa) | 44 | 123 | - | - |
| Dämpfung bei 20°C | | | 0,11 | 0,10 | - | - |
| -Modul bei 110°C | | (MPa) | 32 | 53 | - | - |
| Dämpfung bei 110°C | | | 0,02 | 0,05 | - | - |
| Weiterreißwiderstand | (DIN 53515) | (kN/m) | 54 | 84 | 57 | 83 |
| Compression Set (70°C) | (ASTM385/B) | (%) | 37 | 42 | 41 | 53 |
| Stoßelastizität | (DIN 53512) | (%) | 36 | 37 | 32 | 30 |
| Bruchspannung | (DIN 53504) | (MPa) | 47 | 51 | 65 | 51 |
| nach Lagerung 12 Wochen in Wasser bei 70°C | | | | | | |
| Bruchspannung | (DIN 53504) | (MPa) | 20 | 35 | zerstört | zerstört |
| Shore A-Härte | (DIN 53505) | | 91 | 95 | " | " |
| Shore D-Härte | (DIN 53505) | | 40 | 54 | " | " |

Erdverrottungsschnelltest nach 2 Monaten 10, 11 kein sichtbarer Angriff, 12 Probe zerstört (unter Spannung, Wärme, Feuchte) nach 4 Monaten 10, 11 kein sichtbarer Angriff

## Patentansprüche

1. Hydroxyl-Endgruppen aufweisende Polyether-Polycarbonate mit MG von 500-12.000, bestehend aus Hexamethylengruppen, wobei gegebenenfalls bis zu 50 Mol-% der Hexamethylengruppen durch Penta-, Hepta-, Octa-, Nona- oder Decamethylengruppen ersetzt sind, die statistisch, alternierend oder blockweise durch Ether- und Carbonatgruppen verknüpft sind, wobei das Verhältnis von Ethergruppen zu Carbonatgruppen 5:1 bis 1:5 beträgt.

2. Polyether-Polycarbonate nach Anspruch 1, bestehend ausschließlich aus Hexamethylengruppen.

3. Polyether-Polycarbonate nach Anspruch 1 oder 2, bei denen das Verhältnis von Ether-zu Carbonatgruppen 3:1 bis 1:3 beträgt.

4. Verfahren zur Herstellung von Polyether-Polycarbonaten nach Ansprüchen 1-3. dadurch gekennzeichnet, daß man in der ersten Reaktionsstufe Polyetherdiole mit MG von 150-500 durch an sich bekannte Veretherung von Hexandiol-1,6 und gegebenenfalls Heptandiol-1.7. Octandiol-1.8, Nonandiol-1.9 oder durch Einwirkung von Easen auf entsprechende Reaktionsgemische von $\alpha$.$\Omega$-Diolen. $\alpha$.$\Omega$-Halogenalkoholen und $\alpha$.$\Omega$-Dihalogenalkanen hersteilt und in der 2. Reaktionsstufe die Polyetherdiole in an sich bekannter Weise, gegebenenfalls zusammen mit Pentandiol-1.5. Hexandiol-1.6, Heptandiol-1,7. Octandiol-1.8, Nonandiol-1.9 oder Decandiol-1.10. mit Diarylcarbonaten, Dialkylcarbonaten, Dioxolanonen, Hexandiolbischlorkohlensäureestern, Phosgen oder Harnstoff zu Polyether-Polycarbonaten mit MG von 500-12.000 umsetzt. wobei der Anteil der Diole außer Hexandiol höchstens 50 Mol-% in den beiden Reaktionsstufen ausmachen darf.

5. Verfahren zur Herstellung von gegebenenfalls geschäumten Polyurethan-Kunststoffen durch Umsetzung von höhermolekularen, mindestens zwei Hydroxylgruppen enthaltenden Verbindungen, gegebenenfalls weiteren niedermolekularen Di- und Polyolen. niedermolekularen Kettenverlängerern und gegebenenfalls Treibmittein mit Di- und oder Polyisocyanaten nach dem Ein- oder Zweistufenverfahren. gegebenenfalls in inerten Lösungsmitteln oder in wäßriger Emulsion und Üblichen Hilfs-und Zusatzstoffen. dadurch gekennzeichnet. daß die höhermolekularen Hydroxyverbindungen zumindest.zu 50 Gew.-% aus Polyether-Polycarbonaten nach Ansprüchen 1 - 3 bestehen.

## Claims

1. Hydroxyl-terminated polyether polycarbonates with a molecular weight of 500 to 12,000 consisting of hexamethylene groups - up to 50 mol-% of the hexamethylene groups being replaced by penta-, hepta-, octa-, nona- or decamethylene groups - which are linked statistically, in alternation or in blocks by ether and carbonate groups, the ratio of ether groups to carbonate groups being 5:1 to 1:5.

2. Polyether polycarbonates as claimed in claim 1 consisting solely of hexamethylene groups.

3. Polyether polycarbonates as claimed in claim 1 or 2, in which the ratio of ether to carbonate groups is 3:1 to 1:3.

4. A process for the production of the polyether polycarbonates claimed in claims 1 to 3, characterized in that, in the first stage of the reaction, polyether diols with a molecular weight of 150 to 500 are prepared by etherification of hexane-1,6-diol and optionally heptane-1,7-diol, octane-1,8-diol, nonane-1,9-diol by methods known per se or by reaction of bases with corresponding reaction mixtures of $\alpha$,$\Omega$-diols, $\alpha$,$\Omega$-haloalcohols and $\alpha$,$\Omega$-dihaloalkanes and, in the second stage of the reaction, the polyether diols - optionally together with pentane-1,5-diol, hexane-1,6-diol, heptane-1,7-diol, octane-1,8-diol, nonane-1,9-diol or decane-1,10-diol - are reacted with diaryl carbonates, dialkyl carbonates, dioxolanones, hexanediol bischlorocarbonic acid esters, phosgene or urea to form polyether polycarbonates with molecular weights of 500 to 12,000, the percentage content of diols apart from hexanediol making up at most 50 mol-% in both reaction stages.

5. A process for the production of optionally foamed polyurethane plastics by reaction of relatively high molecular weight compounds containing at least two hydroxyl groups, optionally other low molecular weight diols and polyols, low molecular weight chain-extending agents and optionally blowing agents with di- and/or polyisocyanates by the one-stage or two-stage process, optionally in inert solvents or in agueous emulsion and typical auxiliaries and additives, characterized in that at least 50% by weight of the relatively high molecular weight hydroxy compounds consist of the polyether polycarbonates claimed in claims 1 to 3.

## Revendications

1. Polyétherpolycarbonate présentant des radicaux hydroxyle en fin de chaîne avec un poids moléculaire de 500 à 12.000, composé de radicaux hexaméthylène, jusqu'à 50 % en moles des radicaux hexaméthylène étant éventuellement remplacés par des radicaux penta-, hepta-, octa-, nona- ou décaméthylène gui sont liés de manière statistique, alternée ou séquencée par des radicaux éther et carbonate, le rapport des radicaux éther aux radicaux carbonate étant de 5:1 à 1:5.

2. Polyétherpolycarbonate selon la revendication 1 composé exclusivement de radicaux hexaméthylène.

3. Polyétherpolycarbonate selon la revendication 1 ou 2, le rapport des radicaux éther aux radicaux carbonate étant de 3:1 à 1:3.

4. Procédé de préparation de polyétherpolycarbonates selon les revendications 1 à 3, caractérisé en ce que, dans la première étape de la réaction, des polyétherdiols d'un poids moléculaire de 150 à 500 sont préparés par étherification connue d'hexanediol-1,6 et, éventuellement, d'heptanediol-1,7, d'octanediol-1,8, de nonanediol-1,9 ou par action de bases sur des mélanges réactifs correspondants d'$\alpha$,$\Omega$-diols, d'$\alpha$,$\Omega$-halogénoalcools et d'$\alpha$,$\Omega$-dihalogénoalcanes et en ce que, dans la deuxième étape de la réaction, des polyétherdiols sont amenés à réagir de manière connue, éventuellement conjointement avec du pentanediol-1,5, de l'hexanediol-1,6, de l'heptanediol-1,7, de l'octanediol-1,8, du nonanediol-1,9 ou du décanediol-1,10 avec des diarylcarbonates, des dialkylcarbonates, des dioxolanones, des esters d'acide hexanediolbischlorocarbonique, du phosgène ou de l'urée en polyétherpolycarbonates d'un poids moléculaire de l'ordre de 500 à 12.000, la proportion de diols, outre l'hexanediol, devant constituer au maximum 50 % en moles dans les deux étapes de la réaction.

5. Procédé de préparation de plastiques de polyuréthanne, éventuellement moussés, par réaction de composés de poids moléculaire élevé, présentant au moins deux radicaux hydroxyle, éventuellement d'autres diols et polyols de faible poids moléculaire, d'agents allongeurs de chaîne de faible poids moléculaire et, éventuellement, d'agents d'entraînement avec des diisocyanates ou des polyisocyanates selon le procédé à une ou deux étapes, éventuellement dans des solvants inertes ou dans une émulsion aqueuse et des additifs ou adjuvants courants, caractérisé en ce que les composés hydroxylés de poids moléculaire élevé se composent pour au moins 50 % en poids de polyétherpolycarbonates selon les revendications 1 à 3.